# EUROPEAN PATENT SPECIFICATION

(11) **EP 0 869 162 B1**
(45) Date of publication and mention of the grant of the patent: **15.12.2004**
(21) Application number: 98302266.6
(22) Date of filing: 25.03.1998
(51) Int. Cl.: C10K 1/02

(54) **Apparatus for removal of particulate matter from gas streams**
Apparat zum Abscheiden von Festpartikeln aus Gasströmen
Appareil pour la séparation de particules solides de courants gazeux

(30) Priority: 31.03.1997 US 823035
(43) Date of publication of application: 07.10.1998
(73) Proprietor: Destec Energy, Inc., Houston, Texas 77042 (US)
(72) Inventor: Smith, Peyton L., Baton Rouge Louisiana 70815 (US); Morse, John C., Baton Rouge Louisiana 70817 (US)
(74) Representative: Burford, Anthony Frederick

(56) References cited:
- US-A- 4 872 886
- US-A- 5 078 760

## Description

This invention relates to the removal of particulate matter from gaseous streams containing such particulate matter. More particularly, this invention relates to the removal of particulate ash and unconverted carbonaceous particles from syngas streams produced by the gasification or partial gasification of carbonaceous matter.

Three basic processes have been developed for the gasification of carbonaceous materials such as coal. They are: (1) fixed-bed gasification, (2) fluidized-bed gasification, and (3) suspension or entrainment gasification. The present invention relates to the third type of process, suspension or entrainment gasification.

One method of carrying out an entrainment gasification process to produce synthesis gas, hereafter "syngas", is described in US-A-4,872,886 to Henley. In that process, a two-stage gasification reaction in a non-catalytic, fired horizontal slagging reaction zone, or first stage reactor, a stream of oxygen containing gas is reacted with a first increment of a slurry of particulate carbonaceous solids in a liquid carrier at temperatures from 2,400°F (1,300°C) to 3,000°F (1,650°C). The oxygen, carbonaceous solids and liquid carrier are converted into steam, vapour from the liquid carrier, char, slag and gaseous combustion products. The slag which forms in the reactor flows by gravity to the bottom of the reactor and out of the reactor through a tap hole. In a second stage, the steam, vapour from the liquid carrier, char and gaseous products from the fired horizontal reactor are contacted, in an unfired vertical second stage reactor, with a second increment of slurry of particulate carbonaceous solids in a liquid carrier to yield steam, vapour from the liquid carrier, syngas and char entrained in the gaseous effluent. In addition, small sticky slag droplets are entrained and will tend to adhere to and foul surfaces which they contact. The temperature at which the slag droplets solidify ranges over a wide band of temperatures usually upwards of about 1,700°F (925°C). During this sticky phase these molten slag particles or droplets exhibit sufficient stickiness that they can cause extreme difficulties in processing because the particles or droplets adhere to and form deposits on, for example, walls, valves, and outlets of process equipment downstream of the gasifier. Usually, one such piece of downstream equipment is a high temperature heat recovery unit or boiler, which in the case of US-A-4,872,886 is a fire-tube boiler. The fire-tube boiler has the product dirty syngas flow through the tubes and the heat exchange fluid, usually water, flows on the shell side. While it is considerably more economical to use a fire-tube boiler from the standpoint of capital expense, the plugging of the tubes creates a disadvantage of increased maintenance expense. Because the feed coal slurry is finely divided, any char particles and the slag droplets would normally pass through the tubes of a firetube boiler. However, the agglomeration of particles within the passageways of the reactor gaseous exit piping, the sloughing off of deposits which have previously built up on the walls and other points of flow interruption within the reactor passageways and the coating and build up of deposits in the entrance of the boiler, all cause the narrowing of the boiler tube openings which increases pressure drop cross the boiler and eventually plugs the boiler tubes. It is therefore desirable to provide a system or apparatus which will prevent the plugging of the boiler or at least delay such plugging or pressure drop increase for as long as possible prior to having to shut down the gasifier and clean out the boiler tubes.

Various filters have been attempted but have proven unsatisfactory because they either blind themselves too quickly or when partially blinded can not withstand sufficient pressure drop themselves without collapsing. It has now been found that a combination of various filter screens allows small particles of char and slag to pass through the tubes of a fire-tube boiler without plugging while still preventing the larger particles of char-slag agglomerate or sloughed off deposits to be caught and held away from the entrance to the fire-tube boiler tubes and still allow the dirty syngas to pass through the screen combination at reasonable pressure drops.

This combination of advantages has been found to provide satisfactory use in a coal gasification process which has operated under commercial conditions, allowing continued operation for reasonable periods of time. These and other objects and advantages are accomplished in accordance with the present invention as described hereinbelow.

In a first aspect, the present invention provides an apparatus comprising a heat exchanger having a longitudinal axis with an upstream end and a tubesheet thereacross; a gas inlet passageway to the heat exchanger having a bend therein and a particulate removal apparatus located at said bend to remove particulate matter from a gas stream entering said exchanger via said gas inlet passageway, said particulate removal apparatus comprising in combination a final screen means located adjacent said tubesheet and extending across a limb of the bend, said final screen means having a supported wire mesh located in a plane transverse to the longitudinal axis of said heat exchanger and having a central support portion; an intermediate screen means located in the angle of the bend upstream of said final screen means and supported on and extending across said central support portion, said intermediate screen means having at least one elongate cylindrical structure having a plurality of longitudinally disposed, apertured internal support members and a plurality of transversely disposed internal support members, such that together said internal support members form a plurality of sections, each said elongate cylindrical structure being oriented with its longitudinal axis perpendicular to the plane of said wire mesh of the final screen and covered about its periphery by wire mesh extending transversely of said final screen means, and an initial screen means having an L-shaped supporting frame structure having an upper limb, being the vertical portion of the L-shape and which is in a plane transverse to the plane of the final screen means and covers the upstream side of the intermediate screen means, and a lower limb, being the horizontal portion of the L-shape and which extends in the upstream direction in a plane parallel to the final screen means and covers the portion of the final screen means on the upstream side of the intermediate screen means and adjacent to it, both the vertical portion and the horizontal portion being covered by a wire mesh material, and wherein each of said final screen means, said intermediate screen means and said initial screen means are attached together.

In a preferred embodiment the combination of screen means is able to withstand up to 10 pounds per square inch (70 kPa). Preferably, the wire mesh is composed of a nickel and chromium containing alloy.

The present invention also provides a particulate removal apparatus for use in the apparatus of first aspect of the invention said particle removal apparatus being for location at a bend in a gas inlet passage to a heat exchanger having a longitudinal axis with an upstream end and a tubesheet thereacross to remove particulate matter from a gas stream entering said exchanger via said gas inlet passageway, said particulate removal apparatus comprising in combination
a) a final screen means for location adjacent said tubesheet and extending across a limb of the bend, said final screen means having supported wire mesh for location in a plane transverse to the longitudinal axis of said heat exchanger and having a central support portion;
b) an intermediate screen means for location in the angle of the bend upstream of said final screen means supported on and extending across said central support portion and having at least one elongate cylindrical structure having a plurality of longitudinally disposed, apertured internal support members and a plurality of transversely disposed internal support members, such that together said internal support members form a plurality of sections, each said elongate cylindrical structure being oriented with its longitudinal axis perpendicular to the plane of said wire mesh of the final screen and being covered about its periphery by wire mesh extending transversely of said final screen means, and
c) an initial screen means having an L-shaped supporting frame structure having an upper limb, being the vertical portion of the L-shape and which is in a plane transverse to the plane of the final screen means and covers the upstream side of the intermediate screen means and a lower limb, being the horizontal portion of the L-shape and which extends in the upstream direction in a plane parallel to the final screen means and covers the portion of the final screen means on the upstream side of the intermediate screen means and adjacent to it, both the vertical portion and the horizontal portion being covered by a wire mesh material, both the vertical portion and the horizontal portion being covered by a wire mesh material, and wherein each of said final screen means, said intermediate screen means (and said initial screen means are attached together.

The apparatus of the present invention can be more easily described by reference to the Figures of the Drawings. In each of the Figures, which are not to scale, like numbers represent the same parts.

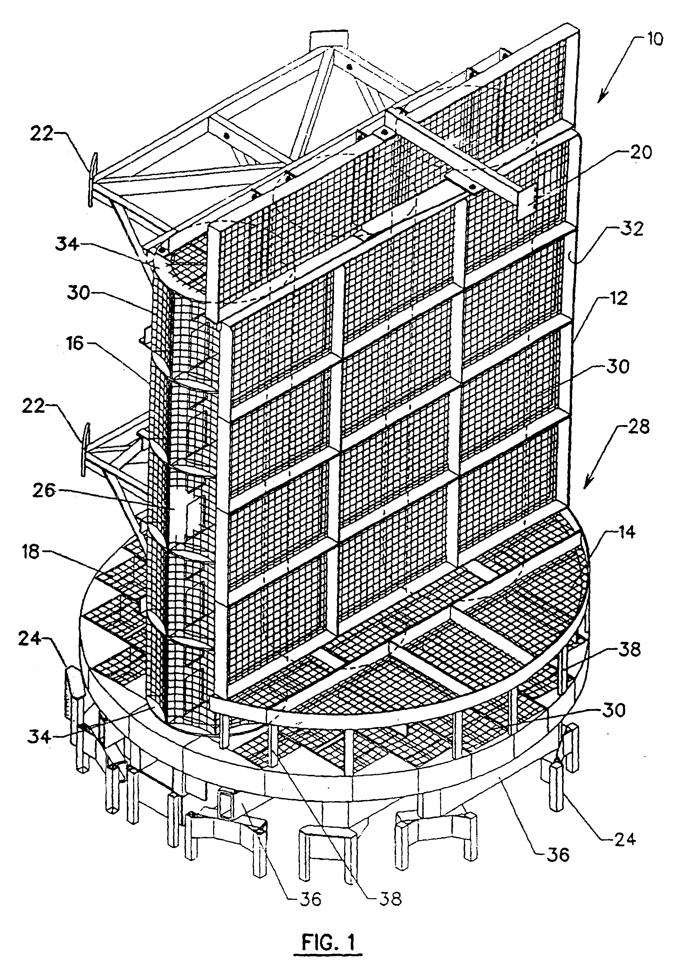

As shown in Fig. 1, a particulate removal apparatus of the invention is shown in a partial cut out perspective view with hidden lines showing the outline of several cylindrical structures forming the intermediate screen means. Various supports and braces are shown as they would connect with points on the vessel walls (which are not included), but are not a part of the invention itself.

Fig. 2 shows the reverse angle of Fig. 1 also in partial cut out perspective. The three cylindrical structures of the intermediate screen members are more apparent than from Fig. 1.

Fig. 3 shows a part of particulate removal apparatus of the invention without the initial screen member for clarity of viewing the intermediate screen structure and is a partial cut out perspective view.

The gasification of carbonaceous materials, such as entrainment or suspension processes, presents a high temperature, high pressure environment with corrosive and erosive gaseous streams flowing in the process piping and equipment. Deposits of slag, ash and char coat internal surfaces and when such deposits break off and are suspended or entrained with the other entrained solids severe plugging problems are presented. One area which has the potential to quickly plug and require the process to be shut down is the high temperature heat recovery system. In one embodiment of the present invention, a fire-tube boiler used as a high temperature heat recovery apparatus is protected from agglomerates of ash, char and slag, from sloughed off deposits and from build up of deposits by an apparatus for removing such particulate matter in the gaseous effluent from an entrained flow gasifier. Typically, the fire-tube boiler is a cylindrical vessel which can be vertically or horizontally disposed and has a longitudinal axis with tubesheets at both ends to affix and align the tubes carrying the process gas. The shell side carries a heat transfer fluid, preferably water, which is used to convey heat away from the process gas and recover steam. In order to prevent plugging of the tubes of the fire-tube boiler, a combination of screen means is employed prior to entry of the gas into the fire-tube boiler or any similar heat exchange device. Preferably, the screen means combination is adjacent the tubesheet and includes a final screen means ahead of the heat exchanger in the gas flow direction having a wire mesh material on a supporting frame such that the wire mesh prevents entry into the heat exchanger of particles large enough to cause plugging. While this final screen means will prevent plugging of the heat exchanger or fire-tube boiler, the final screen means, if used by itself, tends to plug quickly and because of its flat planar structure can withstand a pressure drop of only 3.5 to 4 pounds per square inch (psi) (24 to 28 kPa). Therefore, the final screen by itself is not able to function effectively to prevent plugging the heat exchanger with any degree of continued processing capability. The final screen means has a central portion which provides support for the combined intermediate screen means.

The intermediate screen means is further upstream of the final screen means and is supported by the central portion of the final screen means. The intermediate screen means can be any curved structure having internal support means and which is elongate in comparison to the flat planar structure of the final screen means and is covered about its periphery with a wire mesh material. That is, the intermediate screen means has a general planar axis transverse to that of the final screen means and generally in alignment with the longitudinal axis of the heat exchanger. More preferably, the central support area of the final screen means supports three curved structures which have longitudinal axes transverse to the plane of the final screen means and which are parallel to the longitudinal axis of the heat exchanger. Most preferred is an intermediate screen means which is a cylindrical structure having its longitudinal axis transverse to the plane of the final screen means and in parallel to the longitudinal axis of the heat exchanger, in which the cylindrical structure of the intermediate screen means has a plurality of longitudinal support members and a plurality of transverse support members which form a plurality of supporting sections which are covered by wire mesh material. Because the intermediate screen means has its longitudinal axis (or axes when there is more than one structural member) transverse to the plane of the final screen, the gas flow through the intermediate screen does not tend to blind, web over or become fouled, except after a more than expected time period in comparison to the final screen means used alone. Likewise, because of the gas flowing in the longitudinal direction of the intermediate screen axis (or axes) and its decreased tendency to blind, the pressure drop across the intermediate screen is lower and the intermediate screen means can withstand up to 10 psi (70 kPa) or more, such as about 50 psi (350 kPa).

Ahead or upstream of the intermediate screen means, the initial screen means acts to protect the other two screen means from fouling by larger agglomerates or sloughed off deposits. The initial screen means requires more rugged construction because it first encounters the hot gases and largest pieces of particulate matter. One embodiment of the initial screen means includes a supporting frame structure to which is attached a wire mesh material. Preferably, the initial screen means covers the entire intermediate screen means in the passageway leading from the gasification reactor to the high temperature heat recovery system. The gaseous effluent stream has no path for by-passing the initial screen means, except to pass over the initial screen means where it is caught by the top of the intermediate screen means. However, this rarely happens until the initial screen means is heavily blinded.

In a more preferred embodiment, the initial screen means is in the form of an L-shaped screen means having an upper portion which is in a plane transverse to the plane of the final screen means and a lower portion which is in a plane parallel to the plane of the final screen means.

As constructed in a most preferred embodiment and as shown in Fig. 1, the particulate removal apparatus 10 of the present invention is located at the top of a vertically disposed high temperature heat recovery system, such as a fire-tube boiler, not shown. The gaseous product stream from the gasification reactor is led via an inlet pipe into the top of the fire-tube boiler vessel and makes a 90° downward turn passing through the particulate removal apparatus 10 before entry into the fire-tube boiler.

As the gaseous product stream passes into the top of the heat recovery section, the gas first encounters the initial screen means 28, which has vertical portion 12 and horizontal portion 14. Vertical portion 12 has generally rectangular supporting frame members 32 which support wire mesh material 30" which acts as the screening device to remove the particulate matter from the gaseous product stream. The type of supporting structure, such as supporting frame members 32 is entirely a matter of choice and convenience and nothing critical is known with regard to the shape of the supporting frame members 32. Supporting frame members 32 could also be in the form of other geometric shapes, such as triangles, circles, or squares. It is only required that the initial screen 28 formed with the aid of supporting frame members 32 have sufficient strength to withstand pressure drop of about 0.5 psi (3.5 kPa) and the impact of the particulate matter in the gaseous product stream flowing at a velocity of about 80 feet per second (25 m/sec). Horizontal portion 14 of the initial screen means 28 in this preferred embodiment is attached to the vertical portion 12 at the lower edge and forms therewith an L-shaped member. Horizontal portion 14 also is constructed with supporting frame members 32 and conforms generally to the shape of the vessel holding the high temperature heat recovery system, which in this preferred embodiment is a cylinder. Thus, horizontal portion 14 has its outer periphery shaped in the form of a portion of the circumference of a circle.

Both vertical portion 12 and horizontal portion 14 are covered by a wire mesh material 30". The wire mesh material 30" is attached to vertical portion 12 and horizontal portion 14 by any known method, such as by welding or mechanical fasteners for example. The material of construction for wire mesh material 30'' is any metal that can withstand the temperatures and corrosive and erosive atmosphere of the gaseous product stream, such as various steel alloys most suitable for such service. Typically, steel alloys having nickel and chromium, such as Inconel™ 617, a trademark of Inco Alloys International, Inc. of Huntington, WV, give satisfactory service in corrosive environments. Additionally, the Incoloy™ series of alloys, such as, Incoloy™ 800HT have desirable characteristics useful for this type of atmosphere. "Incoloy" is also a trademark of Inco Alloys International, Inc. Similarly, the wire mesh material 30'' used in this initial screen means 28 can also be used on ether sections of the particulate removal apparatus of the present invention.

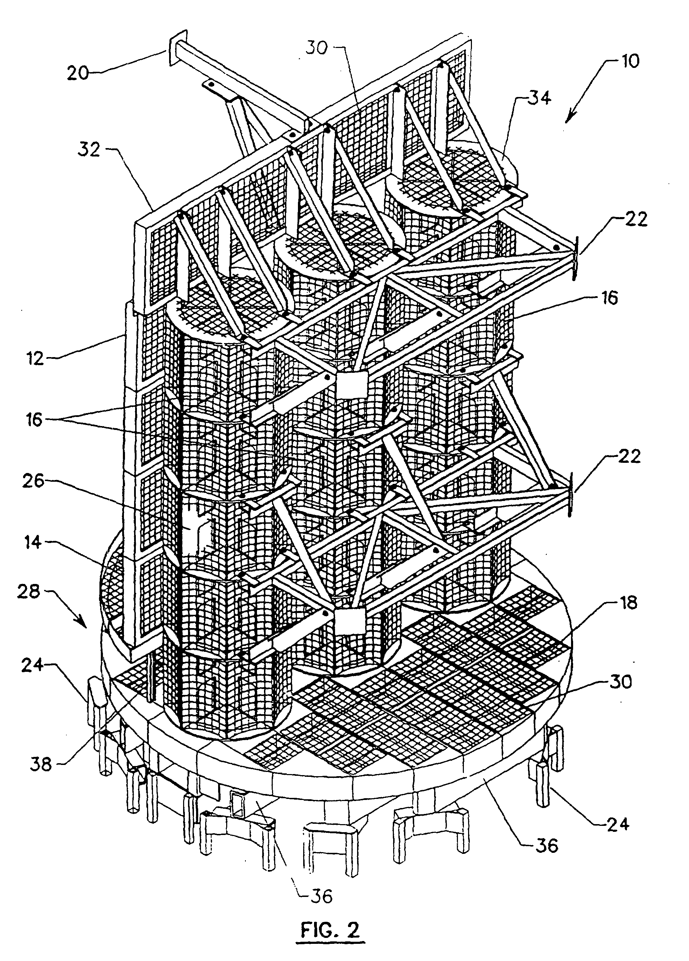

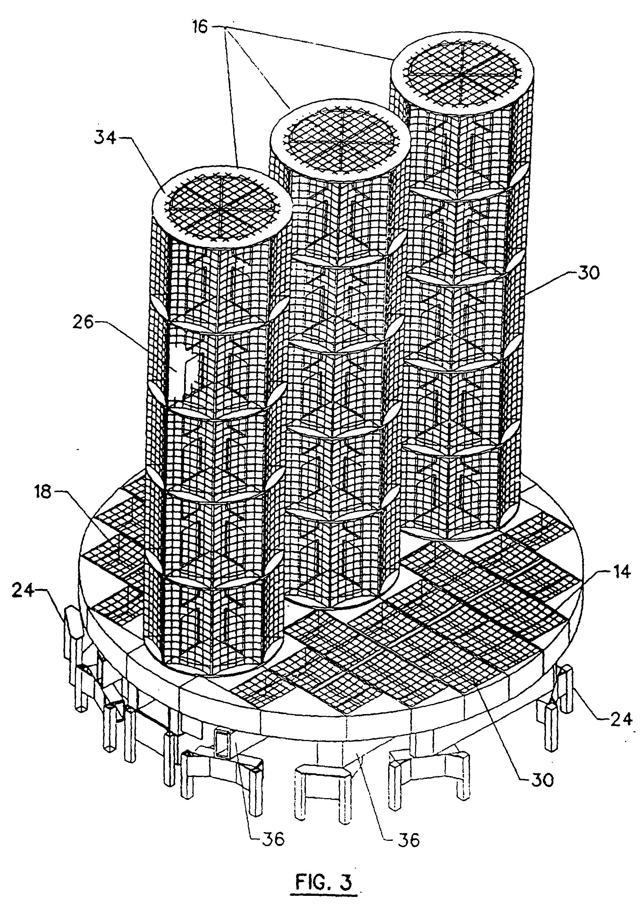

Attached adjacent to the initial screen means 28 is intermediate screen means 16. As shown in the preferred embodiment of Figs 1, 2, and 3, intermediate screen means 16 is composed of three cylindrical structures or risers, each of which are substantially identical, but need not be. Vertical internal support members 26 and horizontal internal support members 34 are used to support wire mesh material 30 in the intermediate screen means 16. A plurality of vertical internal support members 26 can be employed to provide uniform support around the cylindrically shaped structure and, in transverse cross-section through the cylindrical shape, appear as spokes of a wheel. Each of the vertical internal support members 26 is apertured for the passage of the gaseous product stream, the apertures being large enough not to contribute to plugging of the apparatus 10, but still small enough that the vertical internal support member maintains sufficient structural strength to withstand the aforementioned pressure drop. The horizontal internal support members 34 are, in this cylindrical embodiment of intermediate screen means 16, conveniently in the shape of a flat toroidal ring. The open center of the ring provides for passage of the gaseous product stream and the edge of the ring horizontally stabilizes the vertical internal support members 26. Appropriate attachment between the horizontal and vertical support members 34 and 26, respectively, strengthens and stiffens the entire structure of intermediate screen means 16. Fig. 3 shows the apparatus 10 without the initial screen means 28 so that intermediate screen means 16 can be more easily seen. Also, shown is the top of the cylindrical structures or risers covered with wire mesh material 30.

Intermediate screen means 16 is supported by the central portion of final screen means 18 which in this preferred embodiment is in the shape of a flat, circular plate covered with wire mesh material 30, except in the central portion which are typically metal plates. The final screen means is supported by a plurality of support beams 36 which are not a part of the invention, but are merely used to support the apparatus 10 as a whole. The support beams 36 are in turn connected to vertical supports 24 which are attached to the vessel wall and/or the tubesheet (not shown) of the heat exchanger or fire-tube boiler. Horizontal braces or supports 22 are attached by welding or mechanical fasteners to the intermediate screen means 16 and to the vessel walls. One or more horizontal stabilizers 20 attached to the initial screen means 28 and the vessel walls ensures that the initial screen means maintains its intended position. Additionally, a number of initial screen vertical supports 38, which may be the same or different from vertical supports 24 are used to maintain the horizontal portion 14 in position.

The wire mesh material generally has quadrangular openings between the wires which are greater than 0.625 inches (1.6 cm). Preferably, the quadrangular openings in the wire mesh material range from 0.625 inches (1.6 cm) to 0.75 inches (1.9 cm).

While the particulate removal apparatus of this invention is designed to remove particulate matter from the syngas stream, the size of the particulate matter, which is mostly char, and the size of the openings in the wire mesh material together with the size of the heat exchanger tubes will ensure that the smaller particles will flow through the system and must be removed and recovered for recycle to the gasifier by other means. It is sufficient that an orderly campaign of production of syngas can be carried out for weeks and months at a time or longer when using the apparatus of the present invention.

In general, the particulate removal apparatus 10 of the present invention must be composed of materials which can withstand the temperature of the gaseous product stream, typically above 1,700°F (925°C). The pressure within the system can range from 350 psig (2,400 kPa) to 450 psig (3,100 kPa) and should be able to withstand a pressure differential of about 10 psig (70 kPa).

## Claims

1. An apparatus comprising a heat exchanger having a longitudinal axis with an upstream end and a tubesheet thereacross; a gas inlet passageway to the heat exchanger having a bend therein and a particulate removal apparatus located at said bend to remove particulate matter from a gas stream entering said exchanger via said gas inlet passageway, said particulate removal apparatus comprising in combination
a) a final screen means (18) located adjacent said tubesheet and extending across a limb of the bend, said final screen means having supported wire mesh located in a plane transverse to the longitudinal axis of said heat exchanger and having a central support portion;
b) an intermediate screen means (16) located in the angle of the bend upstream of said final screen means (18) and supported on and extending across said central support portion, said intermediate screen means having at least one elongate cylindrical structure having a plurality of longitudinally disposed, apertured internal support members (26) and a plurality of transversely disposed internal support members (34), such that together said internal support members (26,34) form a plurality of sections, each said elongate cylindrical structure being oriented with its longitudinal axis perpendicular to the plane of said wire mesh of the final screen and covered about its periphery by wire mesh extending transversely of said final screen means (18), and
c) an initial screen means (28) having an L-shaped supporting frame structure (32) having an upper limb (12), being the vertical portion of the L-shape and which is in a plane transverse to the plane of the final screen means (18) and covers the upstream side of the intermediate screen means (16), and a lower limb (14), being the horizontal portion of the L-shape and which extends in the upstream direction in a plane parallel to the final screen means (118) and covers the portion of the final screen means (18) on the upstream side of the intermediate screen means (16) and adjacent to it, both the vertical portion (12) and the horizontal portion (14) being covered by a wire mesh material,
and wherein each of said final screen means (18), said intermediate screen means (16) and said initial screen means (28) are attached together.

2. An apparatus of Claim 1, wherein said intermediate screen means (16) comprises at least 3 said cylindrical structures.

3. An apparatus of any one of the preceding claims, wherein the wire mesh of said final screen means (18), the wire mesh of said intermediate screen means (16) and/or the wire mesh of said initial screen means (28) has quadrangular openings greater 1.6 cm (0.625 inches).

4. An apparatus of Claim 3, wherein said quadrangular openings are square and range from 1.6 cm (0.625 inches) to 1.9 cm (0.75 inches) on a side.

5. An apparatus of any one of the preceding claims, wherein the wire mesh is composed of a chromium-nickel alloy.

6. An apparatus of any one of the preceding claims, which is capable of withstanding a pressure drop cross the apparatus from the downstream side to the upstream side of 70 kPa (10 pounds per square inch).

7. An apparatus of any one of the preceding Claims, wherein said heat exchanger is a fire-tube boiler.

8. A coal gasification process in which char and slag is removed from a synthesis gas stream fed to the gas inlet passage of the apparatus as defined in any one of the preceding Claims.

9. A particle removal apparatus for use in the apparatus of Claim 1, said particle removal apparatus being for location at a bend in a gas inlet passage to a heat exchanger having a longitudinal axis with an upstream end and a tubesheet thereacross to remove particulate matter from a gas stream entering said exchanger via said gas inlet passageway, said particulate removal apparatus comprising in combination
a) a final screen means (18) for location adjacent said tubesheet and extending across a limb of the bend, said final screen means having supported wire mesh for location in a plane transverse to the longitudinal axis of said heat exchanger and having a central support portion;
b) an intermediate screen means (16) for location in the angle of the bend upstream of said final screen means supported on and extending across said central support portion and having at least one elongate cylindrical structure having a plurality of longitudinally disposed, apertured internal support members (26) and a plurality of transversely disposed internal support members (34), such that together said internal support members (26,34) form a plurality of sections, each said elongate cylindrical structure being oriented with its longitudinal axis perpendicular to the plane of said wire mesh of the final screen and being covered about its periphery by wire mesh extending transversely of said final screen means (18), and
c) an initial screen means (28) having an L-shaped supporting frame structure (32) having an upper limb (12), being the vertical portion of the L-shape and which is in a plane transverse to the plane of the final screen means (18) and covers the upstream side of the intermediate screen means (16) and a lower limb (14), being the horizontal portion of the L-shape and which extends in the upstream direction in a plane parallel to the final screen means (18) and covers the portion of the final screen means (18) on the upstream side of the intermediate screen means (16) and adjacent to it, both the vertical portion (12) and the horizontal portion (14) being covered by a wire mesh material,
and wherein each of said final screen means (18), said intermediate screen means (16) and said initial screen means (28) are attached together.

10. A particle removal apparatus of Claim 9, wherein said screen means are as defined in any one of Claims 2 to 6.

## Patentansprüche

1. Vorrichtung bestehend aus einem Wärmetauscher mit einer Längsachse, mit einem eintrittsseitigen Ende und einer darin querliegender Rohrplatte; einer zum Wärmetauscher führenden Gaszuführung mit einer darin vorgesehenen Krümmung sowie einer in der Krümmung liegenden Partikelabscheidungs-Vorrichtung zur Abscheidung von partikelförmigen Stoffen aus einem durch die Gaszuführung in den Wärmetauscher eintretenden Gasstrom, wobei die Partikelabscheidungs-Vorrichtung in Kombination umfasst
a) einen Endabscheider (18), der benachbart der Rohrplatte angeordnet ist und sich quer in einem Arm der Krümmung erstreckt, wobei der Endabscheider ein abgestütztes Drahtgewebe aufweist, das in einer Ebene quer zur Längsachse des Wärmetauschers angeordnet ist, und einen zentralen Abstützabschnitt aufweist;
b) einen Zwischenabscheider (16), der in einem Winkel der Krümmung stromauf des Endabscheiders (18) angeordnet ist, der sich auf dem zentralen Abstützabschnitt abstützt und sich quer über diesen erstreckt, wobei der Zwischenabscheider (16) zumindest ein längszylindrisches Bauteil aufweist, das mit einer Vielzahl von in Längsrichtung angeordneten, mit Öffnungen versehenen Innenträgerelementen (26) sowie einer Vielzahl von in Querrichtung angeordneten Innenträgerelementen (34) ausgestattet ist, so dass die Innenträgerelemente (26, 34) zusammen eine Vielzahl von Abschnitten bilden, wobei jedes der längszylindrischen Bauteile mit seiner Längsachse im rechten Winkel zur Ebene des Drahtgewebes des Endabscheiders verläuft und auf seinem Außenumfang durch zum Endabscheider (18) quer verlaufendes Drahtgewebe abgedeckt ist, und
c) einen Primärabscheider (28) mit einer L-förmigen Tragrahmenstruktur (32), die ein oberes Teil (12) aufweist, das den vertikalen Teil der L-förmigen Tragrahmenstruktur bildet, sich in einer Ebene quer zur Endabscheiderebene erstreckt und die Einströmseite des Zwischenabscheiders (16) abdeckt, und die ein unteres Teil (14) aufweist, das den horizontalen Teil der L-Form bildet, sich stromauf in einer Ebene parallel zur Endabscheiderebene erstreckt und denjenigen Abschnitt des Endabscheiders (18) abdeckt, der hin zur Einströmseite des Zwischenabscheiders (16) gerichtet und diesem benachbart angebracht ist, wobei sowohl der vertikale Teil (12) als auch der horizontale Teil (14) mit einem Drahtgewebe abgedeckt sind, und wobei Endabscheider (18), Zwischenabscheider (16) und Primärabscheider (28) aneinander befestigt sind.

2. Vorrichtung nach Anspruch 1, wobei der Zwischenabscheider (16) mindestens drei zylinderförmige Bauteile umfasst.

3. Vorrichtung nach einem der vorhergehenden Ansprüche, wobei das Drahtgewebe des Endabscheiders (18), das Drahtgewebe des Zwischenabscheiders (16) und/oder das Drahtgewebe des Primärabscheiders (28) viereckige Maschenöffnungen von über 1,6 cm (0,625 inches) besitzen.

4. Vorrichtung nach Anspruch 3, wobei die viereckigen Maschenöffnungen quadratisch ausgebildet sind und eine Seitenlänge von 1,6 cm (0,625 inches) bis 1,9 cm (0,75 inches) besitzen.

5. Vorrichtung nach einem der vorhergehenden Ansprüchen, wobei das Metallgewebe aus einer Chrom-Nickel-Legierung besteht.

6. Vorrichtung nach einem der vorhergehenden Ansprüche, die für einen Druckabfall in der Vorrichtung von 70 kPa (10 pounds pro square inch) zwischen Austritts- und Eintrittsseite ausgelegt ist.

7. Vorrichtung nach einem der vorhergehenden Ansprüche, wobei der Wärmetauscher als Rauchrohrkessel ausgebildet ist.

8. Kohlevergasungprozess, bei dem das durch die Gaszuführung der Vorrichtung entsprechend einem der vorhergehenden Ansprüche einströmende Synthesegas von verkohlten Rückständen und Schlacke gereinigt wird.

9. Partikelabscheidungs-Vorrichtung zur Verwendung in einer Vorrichtung gemäß Anspruch 1, wobei die Partikelabscheidungs-Vorrichtung zur Anordnung in einer Krümmung einer Gaszuführung zu einem Wärmetauscher vorgesehen ist, der eine Längsachse aufweist, mit einem eintrittsseitigen Ende und einer darin querliegenden Rohrplatte zur Abscheidung von partikelförmigen Stoffen aus einem durch die Gaszuführung in den Wärmetauscher eintretenden Gasstrom, wobei die Partikelabscheidungs-Vorrichtung in Kombination umfasst
a) einen Endabscheider (18) zur Anordnung benachbart der Rohrplatte, der sich querliegend in einem Arm der Krümmung erstreckt, wobei der Endabscheider ein abgestütztes Drahtgewebe zur Anordnung in einer Ebene quer zur Längsachse des Wärmetauschers und einen zentralen Abstützabschnitt aufweist;
b) einen Zwischenabscheider (16) zur Anordnung in einem Winkel der Krümmung stromauf des Endabscheiders, der durch den zentralen Abstützabschnitt abgestützt wird, sich über diesen erstreckt und zumindest ein längszylindrisches Bauteil aufweist, das mit einer Vielzahl von in Längsrichtung angeordneten, mit Öffnungen versehenen Innenträgerelementen (26) sowie einer Vielzahl von in Querrichtung angeordneten Innenträgerelementen (34) ausgestattet ist, so dass die Innenträgerelemente (26, 34) zusammen eine Vielzahl von Abschnitten bilden, wobei jedes der längszylindrischen Bauteile mit seiner Längsachse im rechten Winkel zur Ebene des Drahtgewebes des Endabscheiders verläuft und auf seinem Außenumfang durch zum Endabscheider (18) quer verlaufendes Drahtgewebe abgedeckt ist, und
c) einen Primärabscheider (28) mit einer L-förmigen Tragrahmenstruktur (32), die ein oberes Teil (12) aufweist, das den vertikalen Teil der L-Form bildet, sich in einer Ebene quer zur Endabscheiderebene befindet und die Einströmseite des Zwischenabscheiders (16) abdeckt, und die ein unteres Teil (14) aufweist, das den horizontalen Teil der L-Form bildet, sich stromauf in einer Ebene parallel zur Endabscheiderebene erstreckt und den Abschnitt des Endabscheiders (18) auf der Einströmseite des Zwischenabscheiders (16) benachbart zu diesem abdeckt, wobei sowohl der vertikale Teil (12) als auch der horizontale Teil (14) mit einem Drahtgewebe abgedeckt sind, und wobei Endabscheider (18), Zwischenabscheider (16) und Primärabscheider (28) aneinander befestigt sind.

10. Partikelabscheidungs-Vorrichtung nach Anspruch 9, wobei das Drahtgewebe dem in einem der Ansprüche 2 - 6 beanspruchten Drahtgewebe entspricht.

## Revendications

1. Appareil comprenant un échangeur de chaleur ayant un axe longitudinal comportant une extrémité amont et une plaque de tubes en travers de celle-ci ; un canal d'entrée des gaz menant à l'échangeur de chaleur, ayant un coude et un appareil de séparation des particules solides situé au niveau dudit coude afin de séparer les particules solides d'un courant gazeux entrant dans ledit échangeur via ledit canal d'entrée des gaz, ledit appareil de séparation des particules solides comprenant, en combinaison :
a) un moyen de filtrage terminal (18) disposé de manière contiguë à ladite plaque de tubes et se prolongeant à travers une branche du coude, ledit moyen de filtrage terminal présentant un grillage sur support situé dans un plan transversal à l'axe longitudinal dudit échangeur de chaleur et présentant une partie centrale de support ;
b) un moyen de filtrage intermédiaire (16) situé dans l'angle du coude en amont dudit moyen de filtrage terminal (18) et soutenu par ladite partie centrale de support en se prolongeant à travers cette dernière, ledit moyen de filtrage intermédiaire ayant au moins une structure cylindrique allongée ayant une pluralité d'éléments internes de support (26) ajourés et disposés longitudinalement et une pluralité d'éléments internes de support (34) disposés transversalement de telle manière que lesdits éléments internes de support (26, 34) forment conjointement une pluralité de sections, chacune desdites structures cylindriques allongées étant orientée de telle sorte que son axe longitudinal soit perpendiculaire au plan dudit grillage du moyen de filtrage terminal, et recouverte sur sa périphérie par un grillage se prolongeant de manière transversale par rapport audit moyen de filtrage terminal (18) ; et,
c) un moyen de filtrage initial (28) présentant une structure de cadre de support en forme de L (32) présentant une jambe supérieure (12) qui représente la partie verticale de la forme en L et qui est située dans un plan transversal au plan du moyen de filtrage terminal (18) en recouvrant la face amont du moyen de filtrage intermédiaire (16), et une jambe inférieure (14) qui représente la partie horizontale de la forme en L et qui se prolonge dans la direction amont dans un plan parallèle au moyen de filtrage terminal (18) en recouvrant la partie du moyen de filtrage terminal (18) située sur la face amont du moyen de filtrage intermédiaire (16) et, de façon contiguë à celui-ci, la partie verticale (12) et la partie horizontale (14) étant toutes deux recouvertes par un matériau grillagé,
et dans lequel chacun desdits moyen de filtrage terminal (18), moyen de filtrage intermédiaire (16) et moyen de filtrage initial (28) sont rattachés les uns aux autres.

2. Appareil selon la revendication 1, dans lequel ledit moyen de filtrage intermédiaire (16) comprend au moins 3 desdites structures cylindriques.

3. Appareil selon l'une quelconque des revendications précédentes, dans lequel le grillage dudit moyen de filtrage terminal (18), le grillage dudit moyen de filtrage intermédiaire (16) et/ou le grillage dudit moyen de filtrage initial (28) présentent des ouvertures quadrangulaires supérieures à 1,6 cm (0,625 pouce).

4. Appareil selon la revendication 3, dans lequel lesdites ouvertures quadrangulaires sont carrées et mesurent de 1,6 cm (0,625 pouce) à 1,9 cm (0,75 pouce) de côté.

5. Appareil selon l'une quelconque des revendications précédentes, dans lequel le grillage est fabriqué dans un alliage de chrome et de nickel.

6. Appareil selon l'une quelconque des revendications précédentes, apte à supporter une chute de pression à travers l'appareil entre le côté aval et le côté amont de 70 kPa (10 livres par pouce carré).

7. Appareil selon l'une quelconque des revendications précédentes, dans lequel ledit échangeur de chaleur est une chaudière à tubes de fumée.

8. Procédé de gazéification du charbon dans lequel on sépare un résidu charbonneux et des scories d'un courant de gaz de synthèse alimentant le canal d'entrée des gaz d'un appareil tel que défini dans l'une quelconque des revendications précédentes.

9. Appareil de séparation de particules utilisé dans l'appareil de la revendication 1, ledit appareil de séparation de particules devant être installé au niveau d'un coude dans un canal d'entrée des gaz menant à un échangeur de chaleur ayant un axe longitudinal comportant une extrémité amont et une plaque de tubes en travers de celle-ci, pour séparer les particules solides d'un courant gazeux pénétrant dans ledit échangeur via ledit canal d'entrée des gaz, ledit appareil de séparation de particules solides comprenant, en combinaison :
a) un moyen de filtrage terminal (18) disposé de manière contiguë à ladite plaque de tubes et se prolongeant à travers une branche du coude, ledit moyen de filtrage terminal présentant un grillage sur support situé dans un plan transversal à l'axe longitudinal dudit échangeur de chaleur et présentant une partie centrale de support ;
b) un moyen de filtrage intermédiaire (16) situé dans l'angle du coude en amont dudit moyen de filtrage terminal, soutenu par ladite partie centrale de support en se prolongeant à travers cette dernière, et ayant au moins une structure cylindrique allongée ayant une pluralité d'éléments internes de support (26) ajourés et disposés longitudinalement et une pluralité d'éléments internes de support (34) disposés transversalement de telle manière que lesdits éléments internes de support (26, 34) forment conjointement une pluralité de sections, chacune desdites structures cylindriques allongées étant orientée de telle sorte que son axe longitudinal soit perpendiculaire au plan dudit grillage du moyen de filtrage terminal, et recouverte sur sa périphérie par un grillage se prolongeant de manière transversale par rapport audit moyen de filtrage terminal (18) ; et,
c) un moyen de filtrage initial (28) présentant une structure de cadre de support en forme de L (32) présentant une jambe supérieure (12) qui représente la partie verticale de la forme en L et qui est située dans un plan transversal au plan du moyen de filtrage terminal (18) en recouvrant la face amont du moyen de filtrage intermédiaire (16), et une jambe inférieure (14) qui représente la partie horizontale de la forme en L et qui se prolonge dans la direction amont dans un plan parallèle au moyen de filtrage terminal (18) en recouvrant la partie du moyen de filtrage terminal (18) située sur la face amont du moyen de filtrage intermédiaire (16) et, de façon contiguë à celui-ci, la partie verticale (12) et la partie horizontale (14) étant toutes deux recouvertes par un matériau grillagé,
et dans lequel chacun desdits moyen de filtrage terminal (18), moyen de filtrage intermédiaire (16) et moyen de filtrage initial (28) sont rattachés les uns aux autres.

10. Appareil de séparation des particules selon la revendication 9, dans lequel lesdits moyens de filtrage sont tels que définis dans l'une quelconque des revendications 2 à 6.
